(19) Europäisches Patentamt
European Patent Office
Office européen des brevets

(11) **EP 2 911 316 A1**

(12) # EUROPEAN PATENT APPLICATION

(43) Date of publication:
**26.08.2015 Bulletin 2015/35**

(51) Int Cl.:
**H04B 7/06** (2006.01)   **H01Q 3/30** (2006.01)

(21) Application number: **14156231.4**

(22) Date of filing: **21.02.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Airrays GmbH**
**01109 Dresden (DE)**

(72) Inventor: **AUE, Volker**
**01309 Dresden (DE)**

(74) Representative: **Lippert, Stachow & Partner**
**Patentanwälte**
**Krenkelstrasse 3**
**01309 Dresden (DE)**

(54) **Antenna system and a method for controlling said antenna system**

(57)    An antenna system comprising a base station, a plurality of antenna elements combined to an antenna, whereas the plurality of antenna elements of one antenna is connected to an antenna element mapper each connected to the base station via an antenna port. The inventions relates also to a method for providing antenna elements of an antenna system with antenna signals whereas the antenna signal is distributed to multiple antenna elements and weighted with antenna element specific parameters. The object of the invention is to provide a configuration that can individually control more antenna elements than the number of antenna ports. This is solved by arranging the antenna elements in an antenna element array wherein all antenna elements are controlled individually; storing antenna port specific beam forming vectors in the antenna array; and every antenna element of the antenna element array is individually controlled by an antenna element specific vector element of the beam forming vectors.

Fig. 11

**Description**

The present invention provides an antenna system comprising a base station, a plurality of antenna elements combined to an antenna, whereas the plurality of antenna elements of one antenna is connected to an antenna element mapper via antenna signal lines and each antenna element mapper is connected to the base station via an antenna port, whereas the number of antenna ports corresponds to the number of antenna element mappers.

The present invention also provides a method for providing antenna elements of an antenna system with antenna signals whereas the antenna signal is distributed to multiple antenna elements and weighted with antenna element specific parameters.

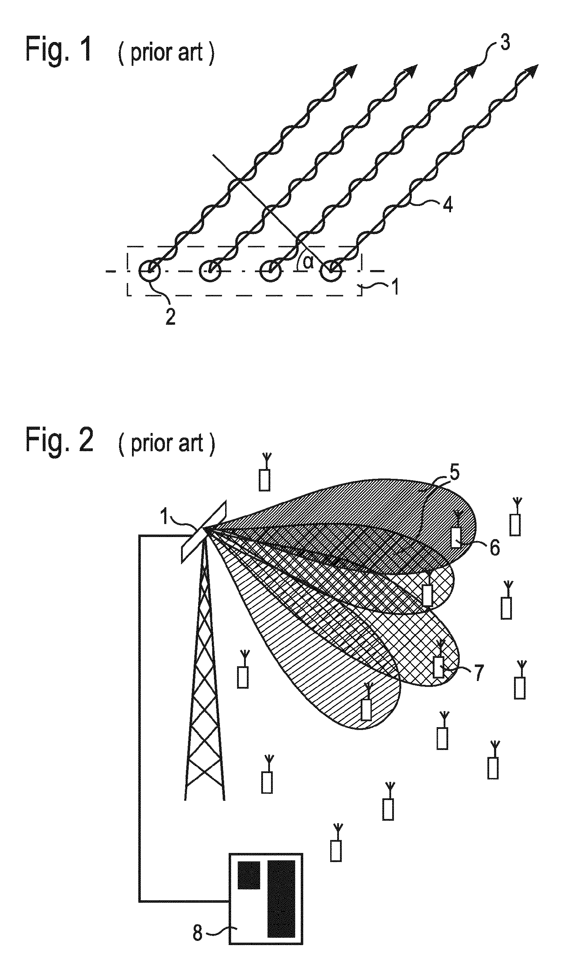

Adaptive antenna arrays are well known since years. Instead of making use of a single antenna to transmit or receive a signal, multiple antennas are used that are arranged in some geometrical order. This arrangement can typically be referred to as an antenna array. For transmission, a signal to be transmitted is presented to all antennas of the antenna array. By carefully controlling each phase of each antenna, the directivity of the antenna array is influenced. This is because the radiated signals in the far field overlap and therefore add constructively or destructively depending on their phase. For illustration purposes, this is shown in figure 1.

Figure 1 shows a linear antenna array 1 made of four antennas 2 transmitting radio frequency (RF) signals in a transmitting direction 3 with wave fronts 4. It shows that in direction of the angle $\alpha$ the wave fronts 4 are all aligned, i.e. the signals from the antennas 2 add constructively in this direction.

In receive direction, antenna array 1 works in a similar fashion. Here, the phases of the individually receiving antennas 2 are aligned such that directivity in a specific direction is obtained.

The main advantage of antenna arrays 1 is that antenna patterns can be formed electronically. One possible application is beam forming, i.e. creating beam patterns with a high directivity towards a specific direction. By controlling the phases, the beam can be steered towards a target receiver or transmitter and it can also be used to track the target.

The conventional phased array beam steering introduces phase and amplitude offsets to the whole of the signal feeding each transmitting antenna. The intention is to focus the signal power in a particular direction. The same technique of applying phase and amplitude offset is used on the receiving antennas to make the receiver more sensitive to signals coming from a particular direction. In LTE, the amplitude and phase of individual resource blocks can be adjusted, making beam steering far more flexible and user-specific. But beam steering does not increase data rates, and therefore in future applications the positive effect of beam steering similar to diversity in terms of increasing signal robustness is no longer sufficient as an exclusive technique.

Figure 2 shows an application of beam forming for mobile radio access technologies. The lobes 5 depicted in figure 2 represent the directivity of the several antennas 2 of the antenna array 1 for some selective users 6 or 7 in both transmit and receive direction. In general, the directivity for transmit and receive direction can be different. In figure 2 the base station 8 sends and receives four user signals with a high directivity making use of beam forming. The users 6 and 7 are - to a large extend - spatially separated. Compared to omni-directional transmission, using beams, the energy sent directed towards a specific user 6 is much more focused, causing less interference to other users 7 and thereby freeing up capacity for others.

Another application is concerned with interference suppression especially when the interference is highly directional. In this case, a pattern is formed that has a high attenuation towards the direction of the interference.

For electronic antenna pattern forming conventional antenna array technology makes use of phase shifters that are applied to the signal at passband. In this case, in transmit direction, the signal is first converted to carrier frequency and then split to be presented to a multitude of phase shifters. Likewise, in receive direction, each antenna signal is first shifted prior to combining and then converted back to baseband where the signal processing takes place.

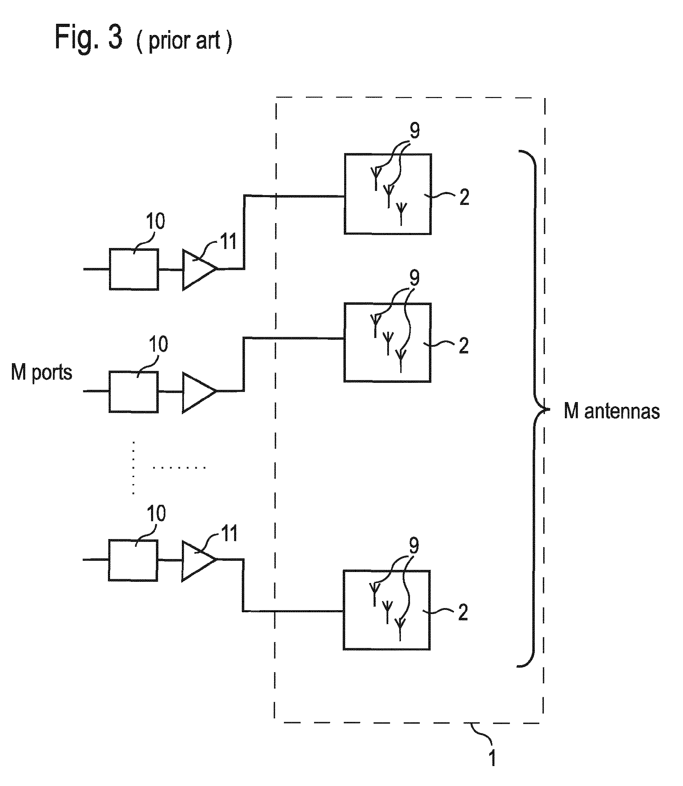

In figure 3 an antenna array 1 comprising M antennas 2 is shown wherein each antenna comprises N antenna elements 9. Usually the antenna ports 10 are provided with amplifiers 11 amplifying the antenna signal.

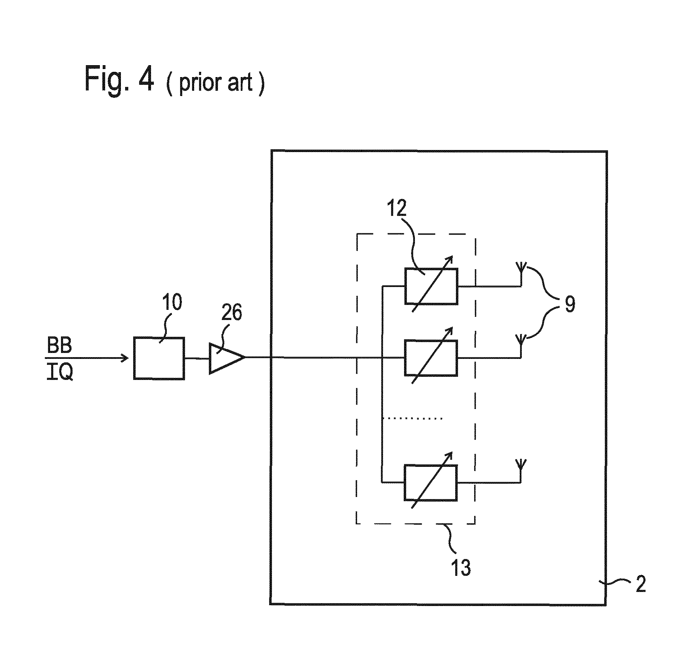

In figure 4 the detailed drawing of a single antenna 2 with several antenna elements 9 according to figure 3 is shown. An antenna 2 comprises antenna elements 9. To achieve the effect of a simple beam forming, e.g. a down tilt, the antenna elements 9 are provided with phase shifters 12. With these phase shifters 12 the antenna signal at the output of the amplifier can be shifted in its phase individually for each antenna element 9. The phase shifting can be manually adjusted. It is also possible to adjust the shift by an electromechanically driven assembly, e.g. by a gear motor. Overlaying the same antenna signal with different phases enables a change of the antenna direction. The arrangement of the phase shifters 12 can be considered as antenna element mapper 13. As shown in figure 4, the antenna element mapper 13 is arranged within the antenna 2.

The demand for faster data transmission increases more and more and must be able to handle. One way to achieve higher data rates is to use multiple antenna systems. Antenna configurations with two or more antennas are called Multiple Input Multiple Output (MIMO). So far, to the previous frequency-time-matrix a third dimension - the space - is added. Every radio signal has its own "spatial fingerprint".

Antenna arrays, however, can be made of many more than four antenna elements. A joint processing of the antenna elements for beam forming, interference mitigation in transmit direction, interference avoidance in receive direction would be desirable.

Beam forming and MIMO (Multiple Input Multiple Output) with unprecedented number of dimensions are being discussed in the cellular 3rd generation Partnership Project (3GPP) standardization body as a means to further increase capacity. Adaptive antenna arrays or adaptive antenna systems can provide the primary basis for enabling this technology.

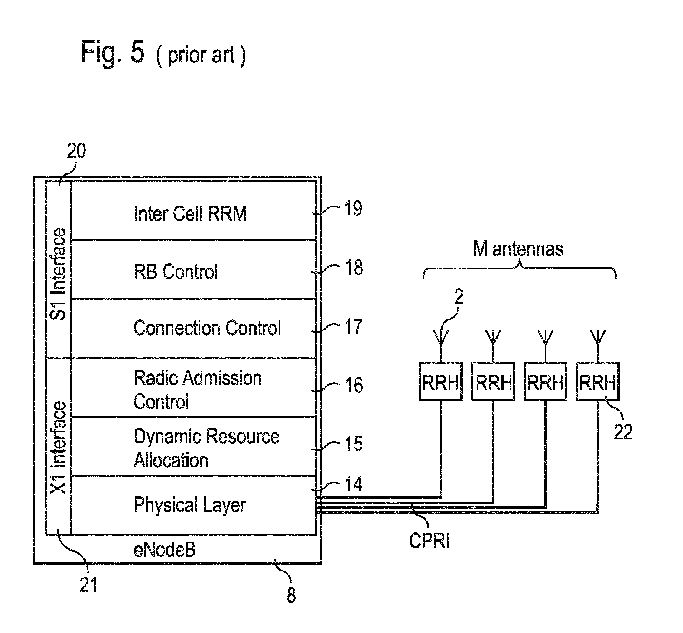

As described in LTE; Evolved Universal Terrestrial Radio Access (E-UTRA) and Evolved Universal Terrestrial Radio Access Network (E-UTRAN); Overall description; Stage 2; 3GPP TS 36.300 version 9.10.0 Release 9, ETSI TS 136 300, Version V9.10.0, February 2013, the base station is located next to the cell tower, where the antennas are mounted on top of the cell tower. In the past, the RF power amplifiers were also located at the bottom of the cell tower and thick low loss RF cables connected the antennas with the powers amplifier. In a more modern arrangement, the power amplifier together with a transceiver is mounted close to the antenna. A unit containing both the transceiver as well as the power amplifier is typically referred to as a remote radio head (RRH). The RRH also includes filters, diplexers and low noise amplifiers for the receiver. The main connections to the base station are baseband signals. Those signals can be transmitted using analog signals (baseband IQ signals) but they are more and more transmitted digitally. Standards that are used for digital transmission are the Common Public Radio Interface (CPRI) or the Open Base Station Architecture Initiative (OBSAI). Figure 5 shows a typical partitioning between the base station and the radio transmission site.

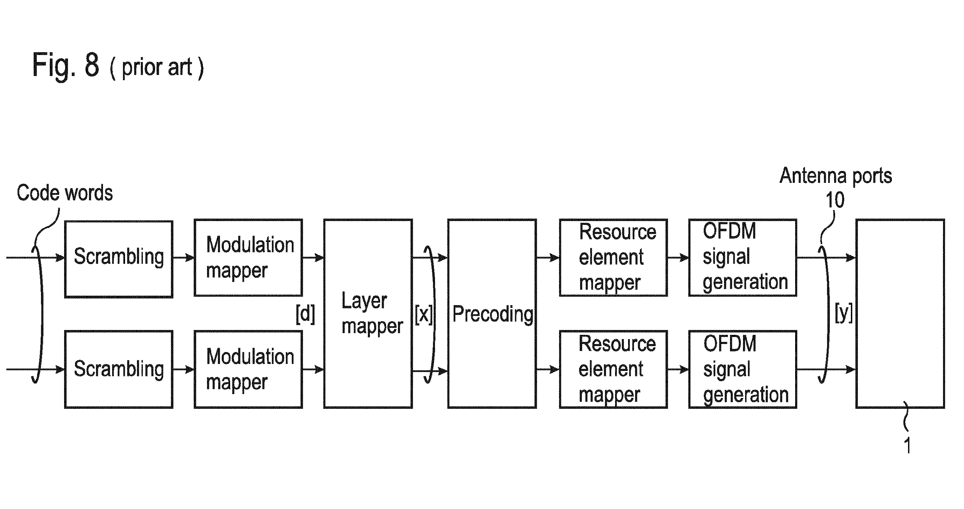

In figure 5 as an example without a loss of generality, it is assumed that said base station 8 (eNodeB) is designed for the 4th generation mobile network standard (LTE - long term evolution). The base station 8 contains the physical layer 14, a unit for dynamic resource allocation 15, a unit for radio admission control 16, a unit for connection control 17 including the media access controller (MAC) (not shown), and radio link controller (RLC) (not shown), a unit for controlling the radio bearer 18 and finally a unit for managing the inter cell radio resources called inter cell radio resource manager (RRM) 19. The base station 8 is connected to a Mobile Management Entity (not shown), a Serving Gateway (not shown) and a Packet Data Network Gateway (not shown) using the S1 interface 20 and to other base stations through the X2 interface 21. The physical layer 14 is connected to M antennas 2 via their baseband units and antenna units as further shown in figure 8 arranged in a so called Remote Radio Head (RRH) 22 which is attached at the antenna mast very close to the antenna 2.

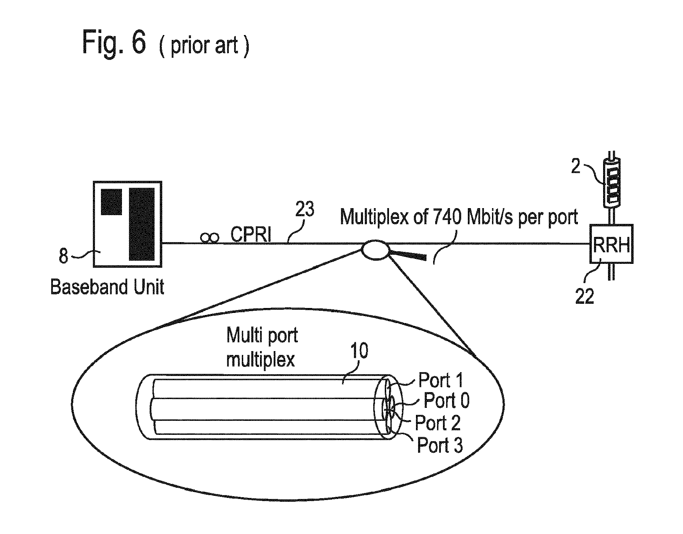

Figure 6 shows a schematic drawing of a conventional connection between a base station 8 and a RRH 22 via a fiber 23 with CPRI (Common Public Radio Interface). Multiple antenna signals are sent to one RRH 22 over one fiber logically divided in several antenna ports 10 as defined in CPRI. Thereby it is only possible to choose static antenna pattern as determined with the phase shifters 12.

At the present, eight antennas for transmit and receive side respectively are regarded as maximum. But, with the partitioning shown in figure 5 and 6, conveying all the received signals from e.g. 100 antenna elements 9 to the base station 8 for further processing in order to increase transmission diversity becomes infeasible, e.g. regarding the power consumption by the hardware, the associated heat generation and the enormous space requirements, and the bandwidth of the link between the antenna system and the base station unit.

The LTE standard uses Single-Carrier Frequency Division Multiple Access (SC-FDMA) in the uplink and Orthogonal Frequency Division Multiple Access (OFDMA) in the downlink. Furthermore, a frame structure is used to allocate and assign resources to different users. A frame spans a time period of 10 ms and consists of 10 subframes of 1 ms duration each, whereas one subframe comprises 12 or 14 OFDM symbols depending on if the extended cyclic prefix is used or the normal cyclic prefix is used, respectively. The smallest addressable unit is a so called resource block that spans 180 kHz in frequency that corresponds to 12 subcarriers of 15 kHz and spans 1 ms in time. A typical eNodeB allocates a block of contiguous resources in frequency for a specific subframe for a specific user. Multiple users can share the bandwidth by having assigned different resource blocks at different time. In 3GPP Release 8 and 9, those blocks are always assigned contiguous but in further releases, also non-contiguous assignment may be possible to increase diversity.

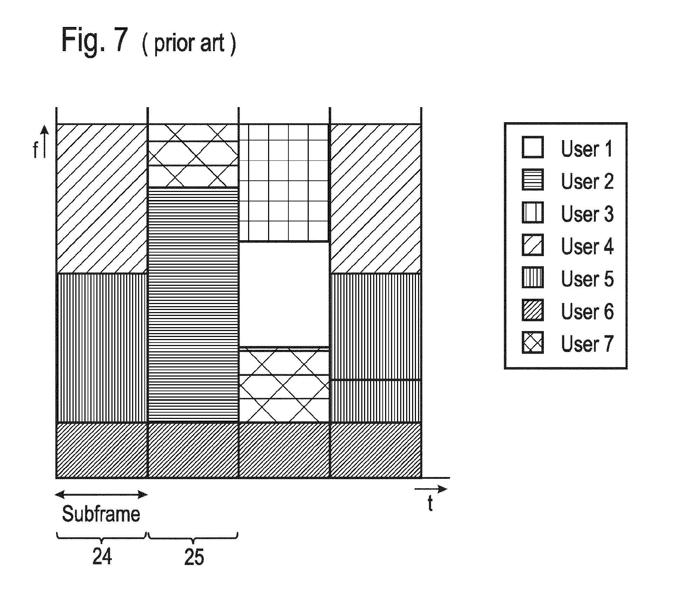

Figure 7 shows an example of an assignment of different users in frequency and time. The usage of frequency resources per time slot, the so called subframe, is depicted with a different hatch for every user. In this example, user 6 is always assigned the same resource at the lower frequency. In the first subframe 24, it also shares the available bandwidth with user 5 and user 4. In the second subframe 25 shown in figure 7, user 6 shares the bandwidth with user 7 and user 2, and so forth.

As described in LTE; Evolved Universal Terrestrial Radio Access (E-UTRA); Physical channels and modulation (3GPP TS 36.211 version 9.1.0 Release 9), ETSI TS 136 211, Version V.1.0, April 2010, the LTE standard already supports some sort of beam forming through a technique that is referred to as precoding.

In general, user data or signals that shall be transferred from a base station to a user equipment (UE) will be transmitted by antennas and received by the UE, whereas the impairments introduced by one kind of a channel has to be overcome. Thereby reference signals (or pilots) at regular frequency locations in the output of each transmitter provide a way for the receivers to estimate the channel coefficients, comparable with transmission conditions or performances in that channel.

Each data "pipe" or channel will not have the same performance. LTE uses feedback mechanisms known as the above-mentioned precoding and beam forming - both forms of "closed-loop Multiple Input Multiple Output (MIMO)", where the handset requests changes to the cross-coupling of the transmitter outputs to give the best match to the channel characteristics.

The terms "code word", "layer", and "precoding" have been adopted specifically for LTE to refer to signals and their processing. Figure 8 shows the processing steps to which they refer to.

The terms are used in the following ways:

A code word represents user data before it is formatted for transmission. One or two code words, CW0 and CW1, can be used depending on the prevailing channel conditions and use case. In the most common case of Single User MIMO (SU-MIMO), two code words are sent to a single handset UE, but in the case of the less common downlink Multi-User MIMO (MU-MIMO), each code word is sent to only one UE.

The term "layer" is synonymous with stream. For MIMO, at least two layers must be used. Up to four are allowed in the 3GPP Long term evolution Release 9 standard. The number of layers is always less than or equal to the number of antennas.

Precoding modifies the layer signals before transmission. This may be done for diversity, beamsteering or spatial multiplexing. The MIMO channel conditions may favor one layer (data stream) over another. If the base station (eNodeB) is given information about the channel (e.g. information sent back from the UE), it can add complex cross-coupling to counteract the imbalance in the channel. In a 2*2 arrangement, LTE uses a simple 1-of-3 precoding choice, which improves performance if the channel is not changing too fast.

Beam forming modifies the transmit signals to give the best carrier to interference and noise ratio (CINR) at the output of the channel.

Therefore, the precoding matrices supported by the 3GPP LTE Rel. 9 standard support up to four transmit antennas and up to 16 code book entries.

In the 3GPP LTE Rel. 9 standard a general structure of downlink physical channels is described, whereas the baseband signal representing a downlink physical channel that is defined in terms of the following steps (fig. 8):

- scrambling of coded bits in each of the code words (streams) to be transmitted on a physical channel,

- modulating of scrambled bits to generate complex-valued modulation symbols [d] (modulated by QPSK, 16 QAM or 64 QAM),

- mapping of the complex-valued modulation symbols [d] onto one or several transmission layers [x] (in LTE standard up to four layers),

- precoding of the complex-valued modulation symbols on each layer [x] for transmission on the antenna ports,

- mapping of complex-valued modulation symbols for each antenna port to resource elements,

- generating of complex-valued time-domain OFDM signal [y] for each antenna port.

Figure 8 shows a schematic drawing of signal processing for transmit diversity and spatial multiplexing (MIMO). The symbols [d], [x] and [y] relate to the above mentioned signals before and after layer mapping and after precoding, respectively. The signals are mapped to the antennas 2 of an antenna array 1 according to the antenna ports 10. With other words, the antenna ports 10 are limited to control only the antennas 2 of the antenna array 1 but not the antenna elements 9.

As already described above, conveying all the received signals from e.g. 100 antenna elements to the base station for further processing in order to increase transmission diversity becomes infeasible.

This invention overcomes those hurdles by introducing a preprocessing at the antenna unit.

It is therefore the object of the invention to provide a configuration that can individually control more antenna elements than the number of antenna ports available after the standardized interface of the 3GPP LTE Rel. 9 standard and improve therewith the beam forming technique.

The invention is based on the idea to apply a phase shift and/or an amplitude scaling to the transmit signals of each antenna element and the receive signals with Tx and Rx beam forming vectors. The Tx beam forming vector is defined as the vector that holds all phases (and optionally the amplitudes) for the transmit paths for all antenna elements. Likewise, the Rx beam forming vector in Rx direction is defined as the vector that holds all phases (and optionally the amplitudes) for the receive paths for all antenna elements. These vectors are applied to the Tx or Rx signals within or very close to the antenna array.

The object of the invention will be solved thereby that

- the antenna elements are arranged in an antenna element array wherein all antenna elements are controlled individually;

- each antenna element mapper is dedicated to one antenna port independently of the numbers of antenna elements;

- in transmitting direction:

- each antenna element mapper comprises phase shifters corresponding to the number of antenna elements of the antenna element array;

- a combining unit is arranged for each antenna element; and

- each combining unit is provided with inputs each connected to every antenna element mapper and an output connected to a corresponding antenna element of the antenna element array;

- in receiving direction:

  - each antenna element mapper comprises phase shifters corresponding to the number of antenna elements of the antenna element array;

  - a combining unit is arranged for each antenna port; and

  - each combining unit is provided with inputs each connected to every antenna element mapper and an output connected to a corresponding antenna port.

The benefit of the aforementioned combining unit is that the number of antenna elements is not limited to the number of antenna port after the 3GPP LTE standard or in any other way. In contrast to former arrangements where every antenna port was connected to one antenna that comprised up to 10 antenna elements, now an unlimited number of antenna elements can form an antenna array whereas each antenna element can be individually controlled. With other words, the antenna array become to an antenna element array wherein not only the antennas but all antenna elements can be controlled individually. Therefore the sum of all data rates per time and space - the capacity - can be increased and the data rates of a single user will be improved.

In an advantageous embodiment of the present antenna system the antenna array comprises means for storing a beam forming vector in a database. In the beam forming database different beam forming patterns are stored. According to the user specific requirements the best-suited beam patterns are allocated. It is important that a synchronization signal or reference signal is provided in order to synchronize every beam forming vector according to the subframe structure of the transmit and receive signals.

In another embodiment of the present antenna system the antenna elements form an active antenna element. That means amplifier and transceiver are arranged in the antenna element.

In another advantageous embodiment of the present antenna system the number of antenna ports is equal or less to the number of antenna elements. Due to the present antenna system more antenna elements can be individually controlled as it is not possible with the 3GPP LTE standard. Therefore the quality of the beam forming procedure can be improved and the amount of data rate and therefore the capacity can be increased.

In another embodiment of the present antenna system the precoding unit is involved in the beam forming data base. The invention enables to process the precoding not in the base station but on the antenna side. This is possible because the beam forming vector is time synchronous for every single user per subframe. The precoding unit can also be installed as an own data base unit or also included into the beam forming matrix. It is also possible to calculate the best-suited precoding scheme in real-time. Since the antenna array typically has no notion of frames and subframes, the subframe start sample index needs to be once conveyed to the antenna element array. The subframe start sample index may point to the first sample of a subframe or frame, or to an arbitrary sample that is used as an anchor sample to which the subframe start can be referred to. Alternatively, the time can also be conveyed through some dedicated wires. If the system uses different subframe timing for uplink and downlink, then both the uplink and the downlink timing needs to be conveyed to the antenna element array. The antenna element array then switches the beam forming vectors at the corresponding subframe boundaries.

The object of the invention will be solved also by a method in such a way that every antenna element of an antenna element array is individually controlled by antenna port specific beam forming vectors that are stored in a beam forming database in the antenna array. The inventive method is characterized by the steps

- arranging the antenna elements in an antenna element array wherein all antenna elements are controlled individually;

- storing antenna port specific beam forming vectors in the antenna array; and

- every antenna element of the antenna element array is individually controlled by an antenna element specific vector element of the beam forming vectors.

In an advantageous embodiment of the presented method every beam forming vector is switched time synchronous according to the subframe structure of the transmit and receive signals.

Thereby different beam forming patterns are transmitted and received over each antenna port on subframe base.

The precoding processing is provided time synchronous for every subframe on the RF side. Because, the precoding is a time invariant operation for the duration of one subframe a subframe start sample index may point to a first sample of a subframe or frame, or to an arbitrary sample that is used as an anchor sample to which the subframe start can be referred to. Alternatively, the time can also be conveyed through some dedicated wires. If the system uses different subframe timing for uplink and downlink, then both the uplink and the downlink timing needs to be conveyed to the antenna element array. The antenna element array then switches the beam forming vectors at the corresponding subframe boundaries.

In an embodiment of the present method, different beam forming patterns are transmitted in the downlink direction over each antenna port on OFDM symbol basis, whereas in receive uplink direction SC-FDMA is used. In this case the selection of the beam forming vector is not provided on a subframe basis, but on symbol basis. This can be used in the sounding reference symbol (SRS).

The beam forming pattern depends on the user specific requirements and can be adapted according to the base station that selects a different beam forming pattern for each subframe by sending some indexing vectors that only contain the indices in the beam forming vector database for the selected beam forming vectors. As aforementioned this can be used also on symbol base.

In another embodiment of the present method for providing an antenna array with antenna signals in an antenna element array arrangement the precoding processing is performed in time domain in the antenna array in such a way that each antenna port is mapped to one specific beam forming pattern of every antenna element of the antenna element array.

The presented method supports large field Trials with many users as long as the number of selected beam forming patterns per subframe is limited to the number of antenna ports supported by the base station.

The present invention will be illustrated by means of embodiments. The corresponding drawings show relevant prior art as well as the embodiment of the invention, i.e.

Fig. 1     a schematic drawing of wave fronts emitted by an antenna array;

Fig. 2     a schematic drawing of beam forming application for mobile radio access technologies;

Fig. 3     a schematic drawing of an antenna array comprising several antennas with antenna elements;

Fig. 4     a schematic drawing of a single antenna comprising several antenna elements;

Fig. 5     a typical partitioning between base station and RF transmission side;

Fig. 6     a schematic drawing of a conventional connection between a base station and a RRH via CPRI;

Fig. 7     an example of LTE resource allocation to different users;

Fig. 8     a schematic drawing of signal processing for transmit diversity and spatial multiplexing (MIMO). The symbols [d], [x] and [y] are used in the specifications to denote signals before and after layer mapping and after precoding, respectively;

Fig. 9     Conceptual block diagram of an antenna array where weighting occurs in the baseband as a basis of the invention;

Fig. 10    a schematic drawing of an antenna system according to the invention for Tx direction;

Fig. 11    a network for beam forming multiple transmit and receive signals according to the invention;

Fig. 12    a detailed schematic diagram of Fig. 11;

Fig. 13    an overview of LTE physical channel processing with an antenna element mapping according to the present invention;

Fig. 14    a base station connected to an antenna element array according to the present invention;

Fig. 15    a schematic drawing of a variable beam forming processing and user allocation;

Fig. 16    a table with exemplary mapping of users to antenna ports for the example of figure 15;

Fig. 17    an alternative LTE physical channel processing with an antenna element mapping where precoding is done after OFDM signal generation according to the present invention;

Fig. 18    an antenna array as an antenna element array which can be actuated by the invention in an element panel design;

Fig. 19    an antenna array as an antenna element array which can be actuated by the invention in an cube design for small cells; and

Fig. 20    an antenna array as an antenna element array which can be actuated by the invention in cylindrical design for flexible 360° beam forming.

The invention is based on a beam forming technique that is distinguished from the prior art as discussed above. Therein the phases are added to the baseband signal prior to up-converting the signal to RF or after down-converting the RF signal. In this case, each antenna element is associated with a transceiver and an RF front-end consisting of power amplifiers, filters, diplexers, and so forth. Such a configuration is shown in figure 3. These active antenna elements form one antenna.

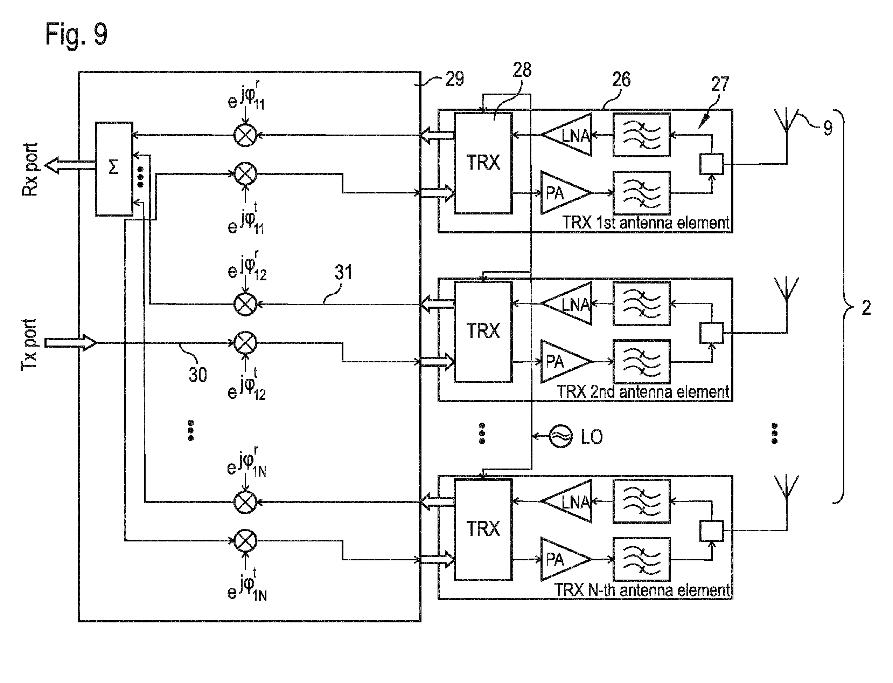

Figure 9 shows an antenna 2 with N antenna elements 9. Each antenna element 9 has its own antenna unit 26 comprising a RF front-end 27 and a transceiver 28 and is associated with a baseband processing unit 29, further shortened as baseband unit. The antenna unit 26 is responsible for radiating the transmit signal for that specific antenna element 9 and for picking up the received signal. In the RF front-end 27 occur amplification and additional filtering of the transmit signal and the receive signal. The transceiver 28 is responsible for up-converting the transmit signal from baseband to RF frequency and it is responsible for down-converting the receive signal from RF to baseband, respectively. The baseband unit 29 itself is responsible for applying a phase shift and/or an amplitude scaling to the transmit signals and the receive signals according to the Tx and Rx beam forming vectors. The Tx beam forming vector is defined as the vector that holds all phases (and optionally the amplitudes) for the transmit paths for all antenna elements.

Referring to figure 9, the beam forming vector in Tx direction 30 is

$$u_T = \begin{bmatrix} e^{j\varphi_1^t} & e^{j\varphi_2^t} & \dots & e^{j\varphi_N^t} \end{bmatrix}^T,$$ with the

phase vector $\begin{bmatrix} \varphi_1^t & \varphi_2^t & \cdots & \varphi_N^t \end{bmatrix}^T$ in case the beam forming vector only affects the phases. If additionally the amplitudes are to be scaled, the beam forming vector would consist of complex valued elements

$$u_T = \begin{bmatrix} u_1^t & u_2^t & \cdots & u_N^t \end{bmatrix}^T.$$

Likewise, the Rx beam forming vector in Rx direction 31 is defined as the vector that holds all phases (and optionally the amplitudes) for the receive paths for all antenna elements.

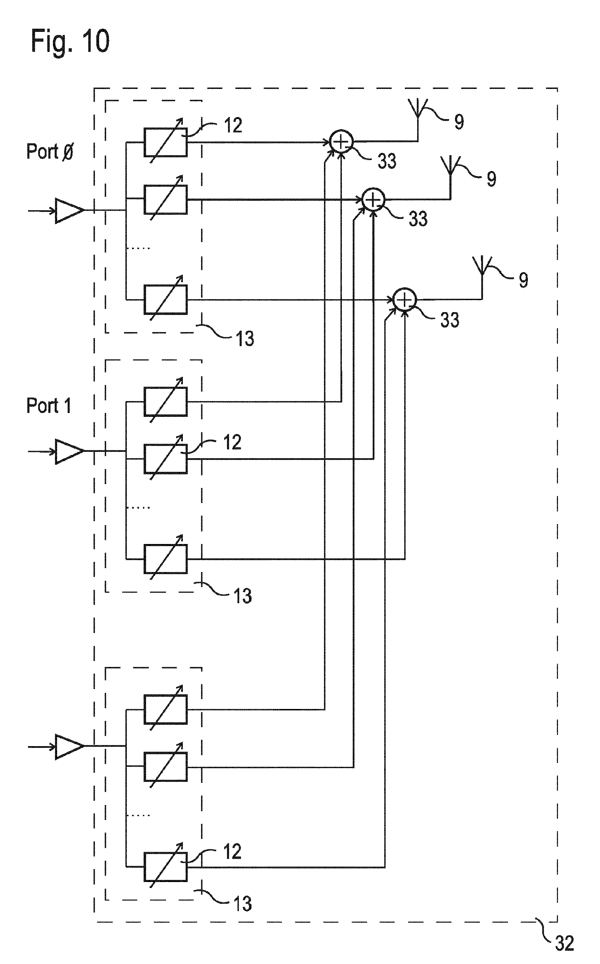

A detailed drawing of the inventive antenna element array 32 of antenna elements 9 is shown in figure 10. The antenna element array 32 with the antenna elements 9 includes combining units 33, preferred and here depicted as adder units that add the corresponding signals of all the phase shifters 12 of all antenna element mappers 13 to an antenna element 9. Therefore the signal of one antenna port is split to every antenna element 9 of the antenna element array 32 according to the beam forming vector applied by the phase shifters 12. It should be noted, that the antenna element mapper 13 in figure 10 is executed and depicted by phase shifters 12 only as an example. An antenna element mapper 13 can also be executed as an baseband unit 29 as above described with regard to figure 9. Thereby beam forming vectors are electronically applied to the signals in both directions 30 and 31.

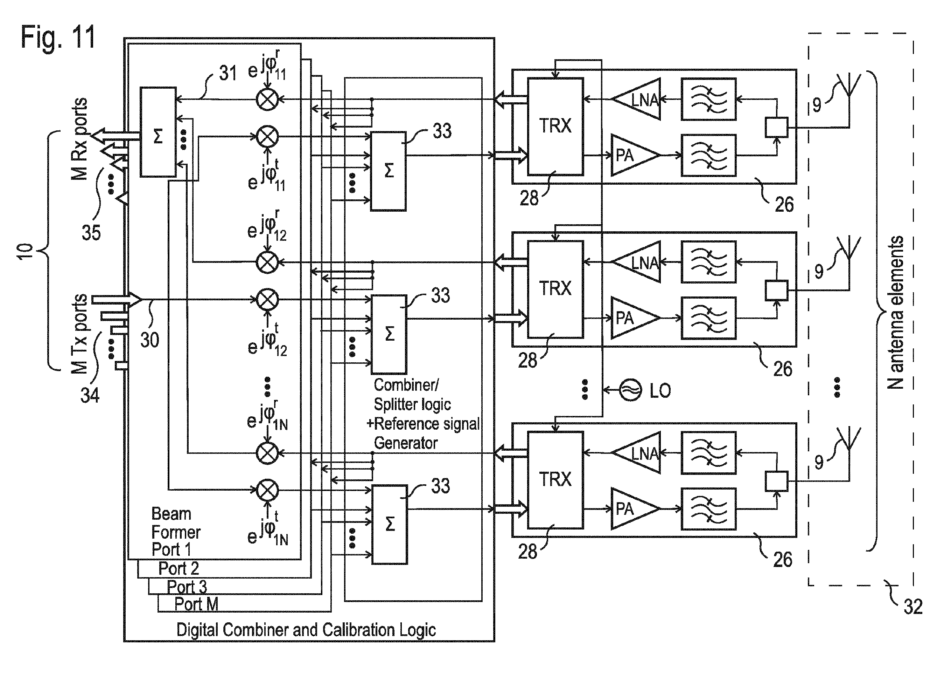

In figure 11 the different signals to be transmitted and received, respectively, are mapped onto different ports 10.

In transmit direction 30 each signal of multiple transmitting ports 34 to be transmitted is individually weighted. Then, the sum of all transmit signals for each antenna element is built prior to presenting the sum of each antenna element 9 to the transceiver 28. In receive direction 31, the received signals for each antenna element 9 are split and then individually weighted by multiplying with some complex values, $e^{j\phi_{pl}^r}$, where the index $p$ denotes the port number, the index $l$ denotes the number of the antenna element and "$r$" denotes that the phase is for the receive side. The weighted sums are then presented to multiple receiving ports 35 of the antenna element array 32. The base station uses one of the Rx ports 35 for each received signal and one of the Tx ports 34 for each transmit signal, i.e., each port uses a different beam forming pattern. If a signal is to be sent over all beams, the base station may send the signal over all available ports.

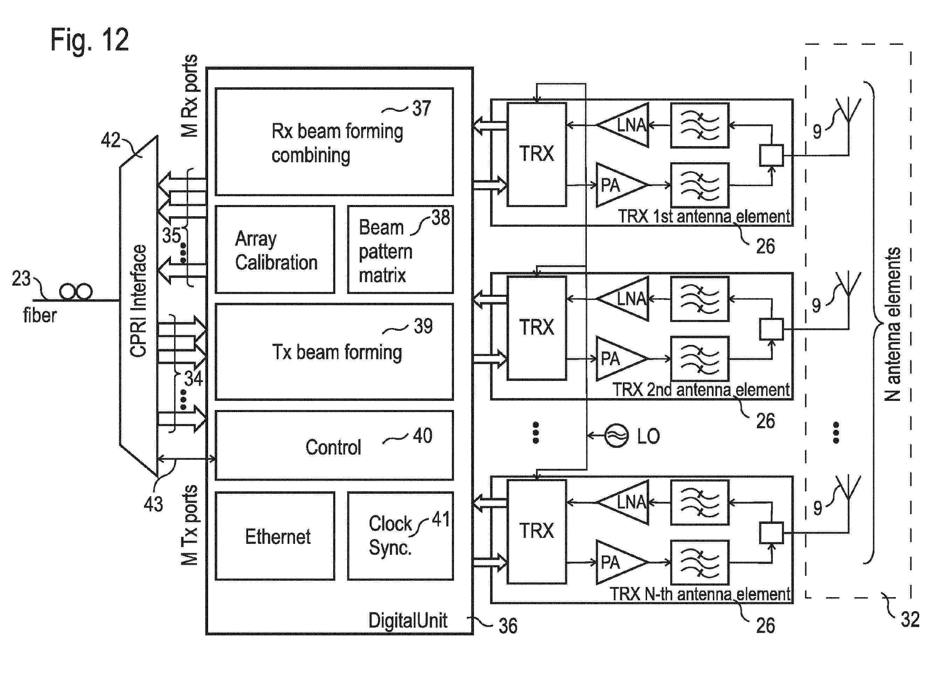

Figure 12 shows the components of a digital unit 36 wherein the above explained procedure is executed. The digital unit includes at least an Rx beam forming and combining unit 37, a beam pattern matrix memory 38, a Tx beam forming unit 39, a control unit 40 and a clock synchronization unit 41. The transmitting ports 34 and the receiving ports 35 are connected to a CPRI interface 42 that transforms the antenna ports 10 transmitted by the fiber 23. The digital unit 40 is connected to the base station 8 (not shown in figure 12) via the fiber 23. Further, a control line 43 is provided to synchronize the clock synchronization unit 41 with the base station 8. Thereby the subframe intervals of the antenna ports 10 a 'known' by the digital unit 36. For Tx beam forming as described regarding figure 11 the digital unit 32 chooses a beam forming vector to the corresponding subframe interval from the beam pattern matrix memory 38. Also for Rx beam forming and combining as described regarding figure 11 the digital unit 32 chooses a beam forming vector to the corresponding subframe interval from the beam pattern matrix memory 38.

In figures 11 and 12 is shown that the antenna element array 32 comprises at least the antenna elements 9. Usually the CPRI interface 42, the digital unit 36 and the antenna units 26 are physically also arranged in the antenna element array 32.

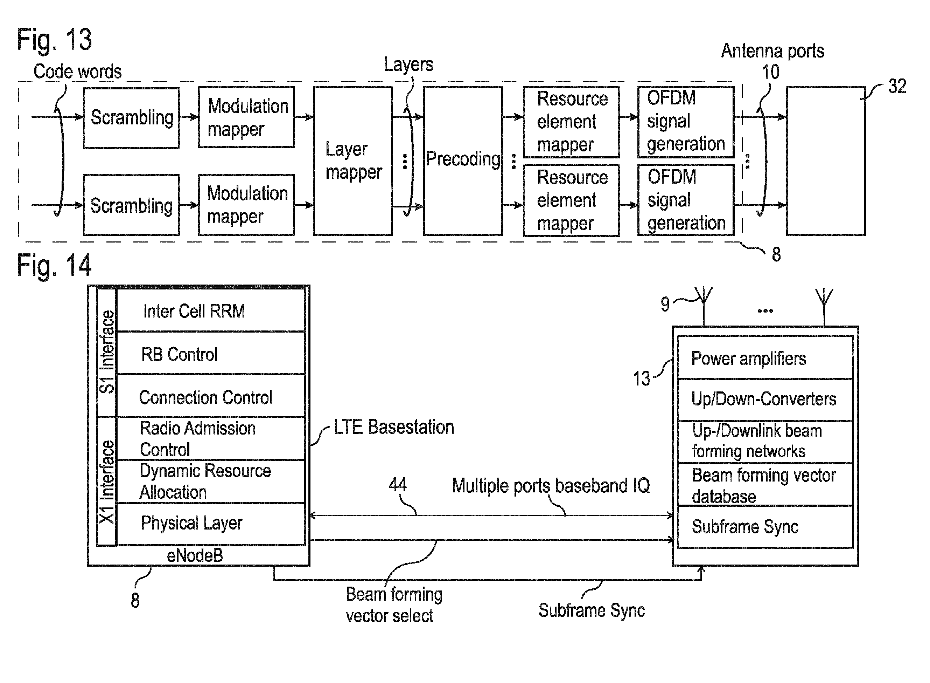

In figure 13 is shown that the antenna element array 32 is connected to the base station 8 via the antenna ports directly because it is possible to control the antenna elements 9 with a configuration as explained above. This is in contrast to figure 8 where the antenna array 1 is connected to the base station 8 and thereby only one of the antennas 2 of the antenna array 1 can be controlled by one of the antenna ports 10.

Figure 14 shows another presentation of the invention. The antenna element array 13 is connected to the base station 8 using a multi ported IQ interface 44.

Each port 10 of the antenna element array 13 is mapped to one specific beam forming pattern of the antenna element array 32. The multiple IQ signals may be sent through the CPRI protocol. The beam forming pattern may be a beam or it may be a completely arbitrary pattern. The pattern itself may be stored in the beam pattern matrix memory 38 here named as a beam forming vector database in the antenna element array 32. Different patterns may be used for transmit and receive, respectively. According to this invention, the base station 8 may select a different beam forming pattern for each subframe. This can be done either by downloading the corresponding vectors for this subframe before the transmission or reception of the corresponding subframe, respectively, or, by selecting the corresponding vectors from the database 38 by sending some indexing vectors that contain the indices in the database for the selected beam forming vectors.

Since the antenna element array 32 typically has no knowledge of frames and subframes, the subframe start sample index needs to be once conveyed to the antenna element array 32. The subframe start sample index may point to the first sample of a subframe or frame, or to an arbitrary sample that is used as an anchor sample to which the subframe start can be referred to. Alternatively, the time can also be conveyed through some dedicated wires. If the system uses a different subframe timing for uplink and downlink, then both the uplink and the downlink timing needs to be conveyed to the antenna element array 32. The antenna element array 32 then switches the beam forming vectors at the corresponding subframe boundaries.

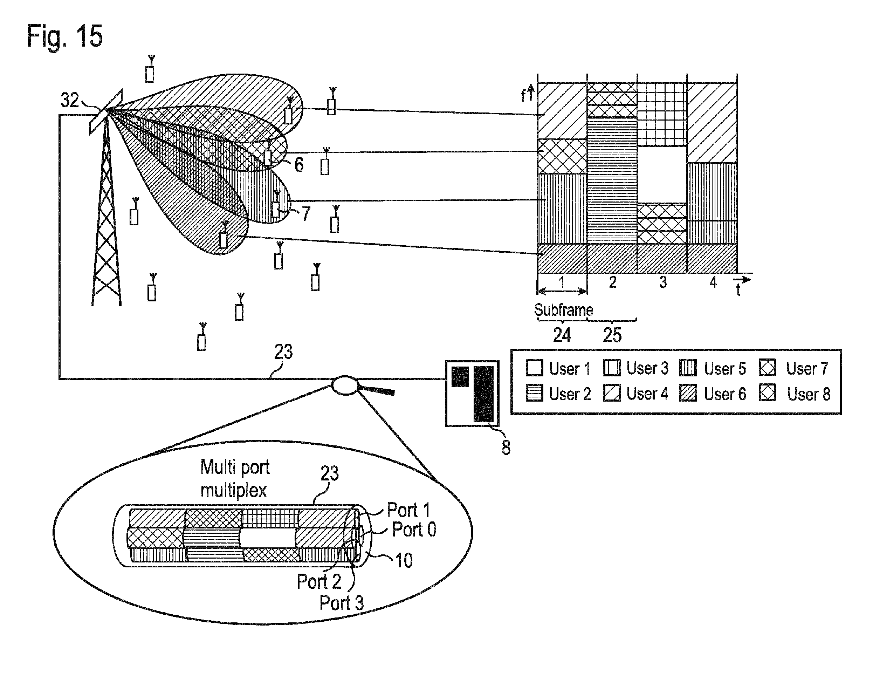

Figure 15 shows an example how different user signals can be mapped onto different beams using this invention, if they have been mapped onto different ports 10 prior to transmission, respectively. In the example of figure 15, only four (eight in case of MIMO) dedicated antenna ports 10 are needed since the base station scheduler never allocates more than four users 6; 7 at a given time slot of a subframe 24; 25. The system may provide a few more ports 10, e.g. one for control data broadcast transmission for physical downlink control channel (PDCCH) transmission and Physical Broadcast Channel (PBCH), Primary and Secondary Synchronization Sequences (PSS and SSS, respectively), etc.

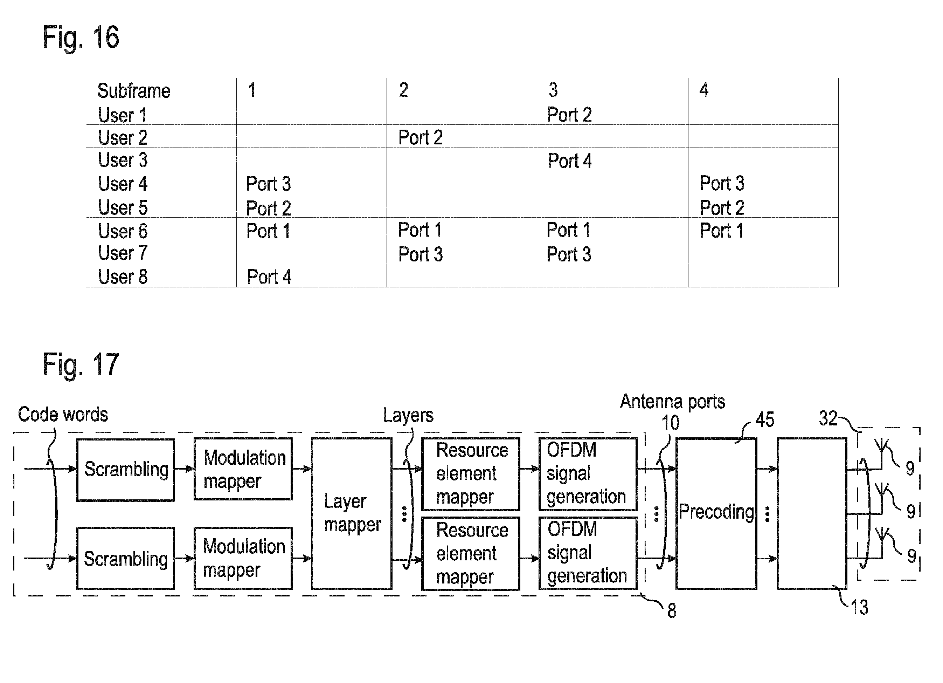

An exemplary mapping of users 6; 7 to antenna ports 10 for the example of figure 15 is shown in fig. 16 as a table.

Recognizing that the precoding 45 in LTE is a time invariant operation for the duration of one subframe and the signal processing is linear, the precoding operation 45 can also be done after the OFDM signal generation 46 provided that all OFDM signals that require a different precoding are generated separately, i.e. are mapped onto different layers and the combination is then done afterwards in the antenna elements mapper. Using this partitioning, LTE downlink signal generation can be done as shown in figure 17.

On the uplink receive side, it is, however, sufficient to combine the signals at the antenna element array, then provide the different time domain signals to the base station and then process the data only in the frequency domain where allocated.

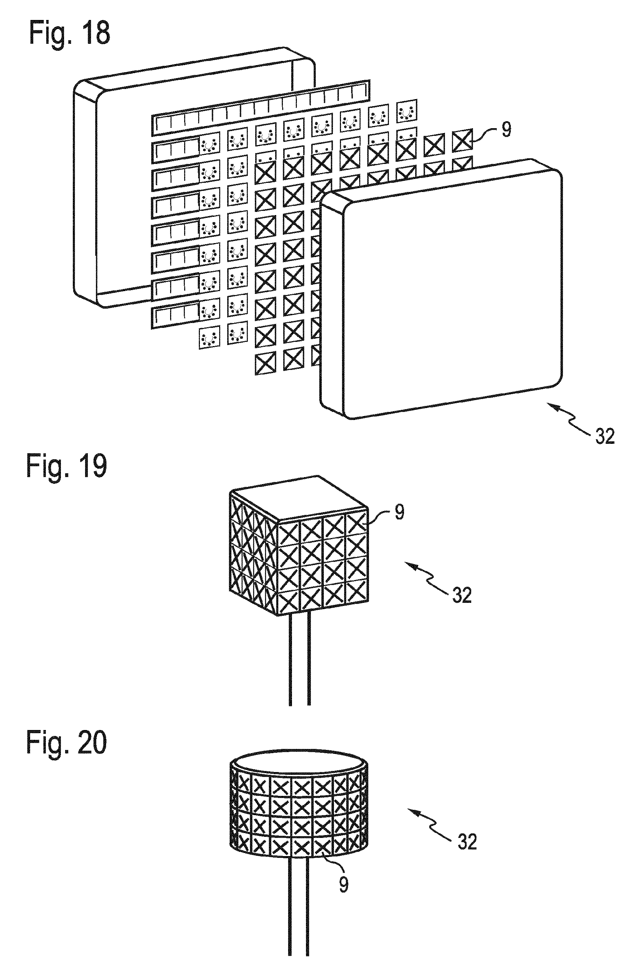

Figures 18 to 20 show various embodiments of antenna arrays designed as an antenna element arrays regarding to the invention. Figure 18 shows an element panel design. In figure 19 a cube design for small cells is shown. Moreover, figure 20 depicts an antenna element array in cylindrical design for flexible 360° beam forming.

**Antenna system and a method for controlling said antenna system**

**List of reference symbols**

| 1 | antenna array |
|---|---|
| 2 | antenna |
| 3 | transmitting direction |
| 4 | wave front |
| α | angle |
| 5 | lobe |
| 6 | specific user |
| 7 | other user |
| 8 | base station |
| 9 | antenna element |
| 10 | antenna port |
| 11 | amplifier |
| 12 | phase shifter |
| 13 | antenna element mapper |
| 14 | physical layer |
| 15 | unit for dynamic resource allocation |
| 16 | unit for radio admission control |
| 17 | unit for connection control |
| 18 | unit for controlling the radio bearer |

19  inter cell radio resource manager (RRM)

20  S1 interface

21  X2 interface

22  Remote Radio Head

23  fiber
user 1 to 7

24  first subframe

25  second subframe

26  antenna unit

27  front end

28  transceiver

29  baseband processing unit, baseband unit

30  Tx-direction

31  Rx-direction

32  antenna element array

33  combining unit, adder

34  transmitting ports

35  receiving ports

36  digital unit

37  Rx beam forming and combining unit

38  beam pattern matrix memory

39  Tx beam forming unit

40  control unit

41  clock synchronization unit

42  CPRI interface

43  control line

44  multi ported IQ interface

45  precoding

46  OFDM signal generation

**Claims**

1. Antenna system comprising

- a base station;
- a plurality of antenna elements combined to an antenna, whereas the plurality of antenna elements of one antenna is connected to an antenna element mapper via antenna signal lines;
- each antenna element mapper is connected to the base station via an antenna port;
- the number of antenna ports corresponds to the number of antenna element mappers, **characterized in that**
- the antenna elements are arranged in an antenna element array wherein all antenna elements are controlled individually;
- each antenna element mapper is dedicated to one antenna port independently of the number of antenna elements;
- in transmitting direction:

- each antenna element mapper comprises phase shifters corresponding to the number of antenna elements of the antenna element array;
- a combining unit is arranged for each antenna element; and
- each combining unit is provided with inputs each connected to every antenna element mapper and an output connected to a corresponding antenna element of the antenna element array;

- in receiving direction:

- each antenna element mapper comprises phase shifters corresponding to the number of antenna elements of the antenna element array;
- a combining unit is arranged for each antenna port; and
- each combining unit is provided with inputs each connected to every antenna element mapper and an output connected to a corresponding antenna port.

2. Antenna system according to claim 1, **characterized in that** the antenna array comprises means for storing a beam forming vector in a database.

3. Antenna system according to claim 1 or 2, **characterized in that** the antenna elements form an antenna element array.

4. Antenna system according to one of the foregoing claims, **characterized in that** the number of antenna ports is equal or less the number of antenna elements.

**5.** Antenna system according to one of the foregoing claims, **characterized in that** the precoding unit is arranged in the beam forming database.

**6.** A method for providing antenna elements of an antenna system with antenna signals whereas the antenna signal is distributed to multiple antenna elements and weighted with antenna element specific parameters **characterized by** the following steps

- arranging the antenna elements in an antenna element array wherein all antenna elements are controlled individually;
- storing antenna port specific beam forming vectors in the antenna array; and
- every antenna element of the antenna element array is individually controlled by an antenna element specific vector element of the beam forming vectors.

**7.** The Method according to claim 6, **characterized by** the following steps:

- storing beam pattern matrix comprising the beam forming vectors in the antenna element matrix,
- transmitting antenna signals via fiber with logically defined antenna ports;

- whereas on every port are transmitted the signals timely divided relating to subframes;
- whereas the signal in one of the ports in one of the subframe-specific time intervals belongs to one of the beam pattern;

- in transmitting direction:

- weighting the signal with the corresponding beam forming vector;
- weighting the signals of the other antenna ports which with their corresponding beam forming vector;
- combining all signals into antenna element signals; and
- delivering the antenna element signals to the antenna elements; and

- in receiving direction:

- receiving antenna element signals from the antenna elements; and
- weighting the antenna element signals with a beam forming vector corresponding to the appropriate subframe interval of the port to be used for receiving data;
- combining all weighted antenna element signals into data to be transmitted by antenna ports.

**8.** The method according to claim 7, **characterized in that** every beam forming vector is switched time synchronous according to the subframe structure of the transmit and receive signal.

**9.** The method according to one of the foregoing claims, **characterized in that** different beam forming patterns are transmitted and received over each antenna port on subframe base.

**10.** The method according to one of the foregoing claims, **characterized in that** the precoding processing is provided under chronological synchronism for every sub frame on the RF side.

**11.** The method according to one of the foregoing claims, **characterized in that** different beam forming patterns are transmitted in the down-link direction over each antenna port on OFDM symbol base, whereas in receive uplink direction SC-FDMA is used.

**12.** The method according to one of the foregoing claims, **characterized in that** the base station selects a different beam forming pattern for each subframe by sending some indexing vectors that only contain the indices in the beam forming vector database for the selected beam forming vectors.

**13.** The method according to one of the foregoing claims, **characterized in that** a precoding processing is performed in time domain in the antenna array in such a way that each antenna port is mapped to one specific beam forming pattern of every antenna element of the antenna element array.

Fig. 1 (prior art)

Fig. 2 (prior art)

Fig. 3 ( prior art )

M ports

M antennas

Fig. 4 ( prior art )

## Fig. 5 ( prior art )

Fig. 6 (prior art)

8 — Baseband Unit

∞ CPRI 23

Multiplex of 740 Mbit/s per port

2

RRH

22

Multi port multiplex 10

Port 1
Port 0
Port 2
Port 3

Fig. 7 ( prior art )

# Fig. 8 ( prior art )

Code words

Antenna ports
10

| Scrambling | → | Modulation mapper | → |
| Scrambling | → | Modulation mapper | → |

[d] → Layer mapper → [x] → Precoding →

| Resource element mapper | → | OFDM signal generation |
| Resource element mapper | → | OFDM signal generation |

→ [y] → 1

EP 2 911 316 A1

Fig. 9

Fig. 10

Fig. 11

Fig. 12

## Fig. 13

Code words

Layers

Antenna ports
10

32

Scrambling → Modulation mapper

Scrambling → Modulation mapper

Layer mapper

Precoding

Resource element mapper → OFDM signal generation

Resource element mapper → OFDM signal generation

8

## Fig. 14

| S1 Interface | Inter Cell RRM |
| | RB Control |
| | Connection Control |
| X1 Interface | Radio Admission Control |
| | Dynamic Resource Allocation |
| | Physical Layer |

eNodeB

LTE Basestation

8

44   Multiple ports baseband IQ

Beam forming vector select

Subframe Sync

9

13

| Power amplifiers |
| Up/Down-Converters |
| Up-/Downlink beam forming networks |
| Beam forming vector database |
| Subframe Sync |

EP 2 911 316 A1

Fig. 15

# Fig. 16

| Subframe | 1 | 2 | 3 | 4 |
|---|---|---|---|---|
| User 1 | | | Port 2 | |
| User 2 | | Port 2 | | |
| User 3 | | | Port 4 | |
| User 4 | Port 3 | | | Port 3 |
| User 5 | Port 2 | | | Port 2 |
| User 6 | Port 1 | Port 1 | Port 1 | Port 1 |
| User 7 | | Port 3 | Port 3 | |
| User 8 | Port 4 | | | |

EP 2 911 316 A1

# Fig. 17

Fig. 18

9

32

Fig. 19

9

32

Fig. 20

32

9

**EUROPEAN SEARCH REPORT**

Application Number

EP 14 15 6231

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 632 057 A1 (ALCATEL LUCENT [FR]) 28 August 2013 (2013-08-28) * paragraphs [0002] - [0007], [0010], [0014], [0020], [0026], [0047], [0061], [0066], [0075]; figures 1,2a,2c,4 * | 1-13 | INV. H04B7/06 ADD. H01Q3/30 |
| A | "3rd Generation Partnership Project; Technical Specification Group Radio Access Network; Evolved Universal Terrestrial Radio Access (E-UTRA); Multiplexing and channel coding (Release 12)", 3GPP DRAFT; DRAFT36212-C00, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 16 December 2013 (2013-12-16), XP050750329, Retrieved from the Internet: URL:http://www.3gpp.org/ftp/tsg_ran/WG1_RL1/DRAFT/ [retrieved on 2013-12-16] * paragraph [5.3.3.1.3A] * | 1-13 | |

TECHNICAL FIELDS
SEARCHED     (IPC)

H01Q
H04B

The present search report has been drawn up for all claims

| Place of search | Date of completion of the search | Examiner |
|---|---|---|
| Munich | 27 May 2014 | Muntean, T |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..............................................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 14 15 6231

This annex lists the patent family members relating to the patent documents cited in  the above-mentioned European search report.
The members are as contained in the European Patent Office EDP file on
The European Patent Office is in no way liable for these particulars which are merely given for the purpose of information.

27-05-2014

| Patent document cited in search report | Publication date | Patent family member(s) | Publication date |
|---|---|---|---|
| EP 2632057        A1 | 28-08-2013 | EP        2632057 A1<br>WO    2013124011 A1 | 28-08-2013<br>29-08-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2. *3GPP TS 36.300 version 9.10.0 Release 9, ETSI TS 136 300, Version V9.10.0,* February 2013

- Evolved Universal Terrestrial Radio Access (E-UTRA); Physical channels and modulation (3GPP TS 36.211 version 9.1.0 Release 9. *ETSI TS 136 211, Version V.1.0,* April 2010